# EUROPEAN PATENT APPLICATION

(11) **EP 3 657 632 A1**
(43) Date of publication of application: **27.05.2020**
(21) Application number: 18208396.4
(22) Date of filing: 26.11.2018
(51) Int. Cl.: H02K 1/14, H02K 3/52, H02K 15/095

(54) **A STATOR FOR A BRUSHLESS MOTOR**

(71) Applicant: Nortech System SA, 6828 Balerna (CH)
(72) Inventor: RIVARA, Antonio, 6828 Balerna (CH)
(74) Representative: Zardi, Marco

(57) **Abstract**

A stator core (1) for making the stator of an inrunner brushless motor, the stator core (1) comprising a plurality of stator core segments (1A-1F), wherein the stator core segments are hinged to each other, at least one hinge is separable to put the hinged segments in a flat arrangement, and the segments include guide means (12) for the internal bridge wires of the stator.

## Description

### Field of application

The invention relates a stator core for an inrunner brushless motor.

### Prior art

A stator of an electric motor comprises basically a stator core and a plurality of coils of a conductive wire (e.g. copper wire). The coils are wound around suitable supports of the stator core. The coils collectively form a winding.

The inrunner motor denotes a motor where the rotor is placed inside the stator. A stator of an inrunner motor (also termed outer stator) has therefore a set of inwardly directed coil supports. Consequently, the process of winding the conductive wire around the coil supports is difficult due to the limited space around the inwardly directed supports.

The known techniques to wind a conductive wire around a support include needle systems and flyer systems. A needle system uses a needle with a reciprocating movement to feed the wire, while a flyer system uses a rotating feeder named flyer. A flyer system is intrinsically faster than a needle system and, for this reason, may be preferred. However a flyer system is generally not applicable to the making of stators of inrunner motors due to the above mentioned lack of space.

It is also desirable to make a stator with internal bridge wires to connect the coils belonging to each phase, to reduce the number of connections to two wires for each phase. However the incorporation of such bridge wires in the stator poses some technical challenges.

A prior art is a stator core made of separable segments (segmented stator), wherein each segment is designed to support one coil and can be separated from other segments. The coils are wound on the individual segments which are then joined to form the stator ring. Each stator segment, being individually wound with the conductive wire, has its own pair of connection wires. This embodiment facilitates the winding process but has some drawbacks. The process of making the stator is more complex and expensive requiring the step of joining together the segments; the electric connection of the stator is more complex due to the presence of two wires for each segment.

A second prior art is a stator core with an openable ring and flexible connections between segments, so that the stator core can be put in a flat configuration with segments lying side by side for winding. This embodiment has the drawback that internal bridge wires to connect different coils are difficult or impossible to realize, because the bridge wires are stressed when the stator collapses from the flat configuration to the annular ring configuration. The risk of a damage of a bridge wire during the collapse to annular ring configuration is of course greater with a thin wire, particularly with a wire of 0.2 mm diameter or less. This is a disadvantage because motors with a thin wire are of great interest in many applications. Still another drawback is the prior art teaches to realize the flexible connections either by fixing the segments onto a substrate, which is applicable only to limited cases and small stators, or by providing an openable iron piece, which is expensive.

### Summary of the invention

The invention aims to overcome the limitations and drawbacks of the prior art, which have been illustrated above. A first aim of the invention is to provide a stator which can incorporate bridge wires between coils, thus having a simplified connection. Another aim of the invention is to provide a stator which can be manufactured using any winding technique, including flyer winding machines. Another aim of the invention is to provide a stator with a ring structure which can be opened and closed without stressing the bridge wires, particularly when a thin wire is used. Another aim of the invention is to simplify the stator to reduce cost.

In a first aspect of the invention, these aims are reached with:
a stator core for making the stator of an inrunner brushless motor, the stator core comprising a plurality of stator core segments which can be arranged to form a stator core ring, wherein:
each stator core segment includes a ferromagnetic core, an insulation body, a coil support;
adjacent core segments are hinged to each other and at least a first segment and a second segment are connected to each other by a separable hinge allowing said first segment and second segment to be connected to or disconnected from one another, so that the stator core ring is openable;
the stator core has an inner side and an outer side;
**characterized in that** the insulation body of each segment includes at least one wire guide member which is positioned in such a way that, when the stator core ring is open, a bridge wire of a winding made on the stator core can be passed around said at least one guide member in such a way that said internal wire, in the space between two adjacent segments, follows a path with a convexity towards the inner side.

The inner side of the stator core is the side facing the rotor mounting space and the intended axis of rotation, when the stator is in annular ring configuration. The outer side is the opposite side. The coil supports extend towards the inner side.

The bridge wire can be guided by the guide member for example passing around the guide member.

The idea underlying the invention is the provision of at least one guide member which allows positioning the internal wire, stretched between two consecutive segments, with a convex path instead of a straight path. Accordingly, the portion of wire between two consecutive segments has a length greater than a rectilinear chord. This additional length makes the bridge wire able to follow the rotation of the segments when the stator ring is closed.

The convex path of said bridge wire is preferably curvilinear. Particularly, said path may be a wave path or a sinusoidal path in preferred embodiments.

Preferably the at least one guide member is/are positioned in such a way that the bridge wire guided by the guide member has a length substantially equal to an arcuate path followed by the same wire after the stator is closed to the annular ring configuration. The at least one guide member therefore act(s) as a length compensator for the wire, when the stator is closed.

The at least one guide member of each segment may include a guide member close to the hinge with an adjacent segment.

The at least one guide member of each segment may include at least a first guide member and a second guide member positioned at a different radial position, thus being staggered in the radial direction.

In a preferred embodiment said at least one guide member includes at least one pin. More preferably said at least one pin extends upwards from an upper edge of the insulation body. In preferred embodiments the at least one pin can have one of the following shapes: cylindrical or substantially cylindrical or a prism or a prism with rounded edges.

In a preferred embodiment, a pin-shaped guide member is positioned in such a way that the distance between the axis of the pin-shaped guide member and the axis of the hinge is not greater than 15%, more preferably not greater than 10%, of the width of a segment.

In a preferred embodiment the insulation body of each segment comprises a left wing and a right wing on the sides of the coil support, and said at least guide member include a left pin projecting upwards from the left wing and a right pin projecting upwards from the right wing.

In a particularly preferred embodiment, for each pair of adjacent segments, a left pin of one segment and a right pin of the other segment are located in the vicinity of a hinge between said two segments. Accordingly, a wire stretched between two adjacent segments encounters a pair of guide pins in the vicinity of the hinge. The wire is preferably passed ahead of one pin and behind of the other pin.

Each pin of the above pair is preferably located within the above mentioned range from the axis of the hinge, i.e. not more that 15% of the width of the segment.

The distance between the two pins of the pair shall be enough to allow the passage of a wire feeder between the two pins. In most applications this distance can be about 4 to 6 mm or less, preferably about 4 to 5 mm.

According to still another preferred embodiment, the two pins of each pair are staggered in the radial direction. Accordingly one pin is located ahead the other pin towards the inner side of the stator core.

Each segment may also comprise wire spacers arranged to space different bridge wires, e.g. bridge wires of different phases. The wire spacers are preferably formed on the insulation body. In a preferred embodiment, the wire spacers are behind the at least one guide pin according to the radial direction. The wire spacers may be formed on the back of the insulation body, thus being located on the outer side of the stator core. A bridge wire retained by said spacers and passing around the guide pin follows a convexity towards the inner side of the stator core.

In an interesting embodiment, the segments are configured to allow a relative rotation of adjacent segments around the respective hinges, when the chain of segments is open, to reach a position where a front base plane of a segment does not intersect with any part of the one or more adjacent segments. As no part of any adjacent segment intersects said front base plane, the space around the corresponding coil support is free and the process of winding the coil is facilitated, e.g. using a flyer machine.

The hinges between adjacent segments are preferably formed on the insulation bodies of the segments. Accordingly, the design and the manufacture of the ferromagnetic core of each segment is simple to make and saves material. Particularly, it is not required to make a hinge on the iron core. The insulation body is made preferably of a plastic material.

Each hinge may include a first hinge member (e.g. a male piece) of a first segment and a second hinge member (e.g. a female piece) of a second segment, wherein the first piece and the second piece are formed on the insulation body of said first segment and second segment, respectively. The first hinge member and the second hinge member may engage to form the hinge. For example the first member may include at least one pin and the second member may include at least one hole or at least one seat to receive said pin. In a separable hinge, the first hinge member and second hinge member can reversibly engage each other.

The iron core of the segments may have left and right edges of a suitable conjugate shape, such as concave and convex, to approach a continuity of the iron core at the hinges. In an embodiment, a convex edge of the iron core of a first segment is received into, and can rotate within, a concave edge of the iron core of a second segment.

More than one hinge may be separable. All segments may be connected to each other by separable hinges, so that each segment is individually separable from other segments. In an embodiment where all hinges are separable, the stator core ring (without the wire coils) can be opened between any pair of adjacent segments.

The stator core or a single stator core segment can be conveniently described with reference to the coordinates: radial, longitudinal, axial. These coordinates are used when appropriate in the present description.

The radial coordinate can be taken on a radial axis, which is the axis of the coils. The axial direction is parallel to the intended axis of rotation. The longitudinal coordinate may be taken on a circumference when the stator core ring is closed or on a line when the stator core ring is open.

A stator core fitted with coils of a conductive wire forms a stator. An aspect of the invention is also a stator including the inventive stator core and coils of a conductive wire made on the supports of said stator core.

Particularly, an aspect of the invention is a stator for an inrunner brushless motor comprising a stator core and a plurality of coils of a conductive wire made on the stator core, wherein:
the stator core has a plurality of segments, wherein the segments can be arranged to form a stator ring, wherein each segment includes a ferromagnetic core and an insulation body, and includes a coil support carrying a respective coil;
adjacent core segments are hinged to each other and at least a first segment and a second segment are connected to each other by a separable hinge so that the stator ring is openable at said separable hinge;
the stator has an inner side and an outer side;
characterized in that: the stator includes an internal wiring for connection of at least two coils made on separate segments; the insulation body of each segment includes at least one wire guide member; at least one bridge wire of said internal wiring is guided by said at least one guide member to follow a path, which is preferably a curvilinear path, with a convexity towards the inner side of the stator when the stator ring is open.

In preferred but not exclusive application of the invention, the wiring is made with a thin wire. In a preferred application of the invention the wire has a diameter of 0.2 mm or less, for example 0.1 to 0.2 mm.

The preferred embodiments described with reference to the stator core are also applicable to the wired stator.

Another aspect of the invention is a process for making a stator for an inrunner brushless motor according to the claims.

The process can involve the use of any wire feeder including for example a needle system or a flyer system. In some embodiments, a flyer system may be preferred due to its superior speed.

The winding process may include the following steps:
a) positioning a wire feeding device in a first start position facing a first support of the stator core;
b) making a first coil around said first support by moving at least one of the feeding device and the support relative to the other;
c) after completion of the first coil, moving the feeding device to a second start position facing a second support of the stator core; making a second coil around said first support by moving at least one of the feeding device and the support relative to the other,
and the step c) includes passing the wire around said guide members of the stator core.

The above steps are preferably performed by a numerically controlled wire feeder.

As stated above, a feature of the invention concerns the making of segment hinges on the insulator of the segments. Accordingly, a further aspect of the invention is:
a stator core for making the stator of an inrunner brushless motor, the stator core comprising a plurality of stator core segments which can be arranged to form a stator core ring, wherein:
each stator core segment includes a ferromagnetic core and an insulation body, and includes a coil support;
adjacent core segments are hinged to each other and at least a first segment and a second segment are connected to each other by a separable hinge allowing said first segment and second segment to be connected to or disconnected from one another, so that the stator core ring is openable;
wherein said hinges connecting the segments are part of the insulation bodies of the segments.

Each of said hinges may comprise a first hinge member and a second hinge member. The first hinge member is made in the insulation body of a first segment; the second hinge member engages the first hinge member to form the hinge, and is made in the insulation body of a second segment. For example the first hinge member includes a male piece and the second hinge member includes a female piece. For example the first hinge member is a pin and the second hinge member is a seat adapted to receive the pin, the pin being rotatable in the seat when the pin is engaged in the seat. The engagement may be reversible to form a separable hinge.

The main advantage of the invention is that the guide means made on the insulation body of the stator segments provide a guided path for the internal wiring of the stator. This guided path compensates for the rotation of segments occurring when the segments are closed into a ring shape. A guided wire (e.g. a bridge wire) may have a length corresponding to an arcuate path followed by the wire when the stator core ring is closed. Accordingly, a stretch or a damage of the wires during closure of the ring is avoided.

Particularly, an advantage of the invention is that the coils of the phase or each phase can be connected by uninterrupted bridge wires. A stator according to the invention may be single-phase or multi-phase. In a multi-phase embodiment, each phase may include two or more coils connected by an uninterrupted bridge wire. A stator according to the invention can be realized with only two connection wires for each phase, wherein each phase may be wound around multiple segments, which is an advantage over prior-art embodiments of separable stators with two connections per segment.

Also, the linked segments (poles of the stator) can collapse to form a closed stator and at the same time keep the bridge wires between the poles in position with separation of phases and keep a start wire and end wire in a suitable position for automatic connection by welding or automatic termination.

When closed, the stator ring is a self-supporting piece and the internal wiring is firmly kept in position, therefore a wound stator can be stored or handled safely. For example the stator can be coupled to a housing made of plastic, aluminum or metal sheet.

Making the hinges as part of the insulators, and not directly on the ferromagnetic core, provides a simpler and less expensive manufacturing process compared to stator cores where the hinges are made on the core, although it introduces a discontinuity of the magnetic core. This is an advantage particularly for engines with a relatively low speed (e.g. not greater than 10'000 rpm) where continuity of the magnetic core is not an essential requisite and the performance is not significantly affected. On the other hand, the cost is greatly reduced.

The advantages of the invention will become clear with the aid of the following description relating to a preferred embodiment.

### Brief description of the figures

Fig. 1 illustrates a stator according to an embodiment of the invention in a closed ring operational configuration.
Fig. 2 illustrates a front prospective view of a stator according to Fig. 1, wherein the stator ring is open and put into a flat configuration where the stator segments are arranged side by side in a row;
Fig. 3 illustrates a rear prospective view of Fig. 2.
Fig. 4 is a view of one of the stator core segments of the stator of Fig. 1.
Fig. 5 is a detail of Fig. 3 showing two adjacent segments.
Fig. 6 is a further enlarged detail of Fig. 5 to show bridge wires passing over the segments.
Fig. 7 is a view from the above of two adjacent stator core segments.
Figs. 8 is a detail of Fig. 7.
Fig. 9 illustrates some segments of the stator of Fig. 1 in another configuration.
Figs. 10 and 11 illustrate some embodiments of a hinge between segments.
Fig. 12 illustrates a possible way of positioning adjacent segments to facilitate winding, in an embodiment of the invention.
Fig. 13 illustrates, in a simplified manner, a setup for winding the stator of Fig. 1, according to an exemplary embodiment.
Fig. 14 illustrates another way to make the stator of Fig. 1.

### Detailed description

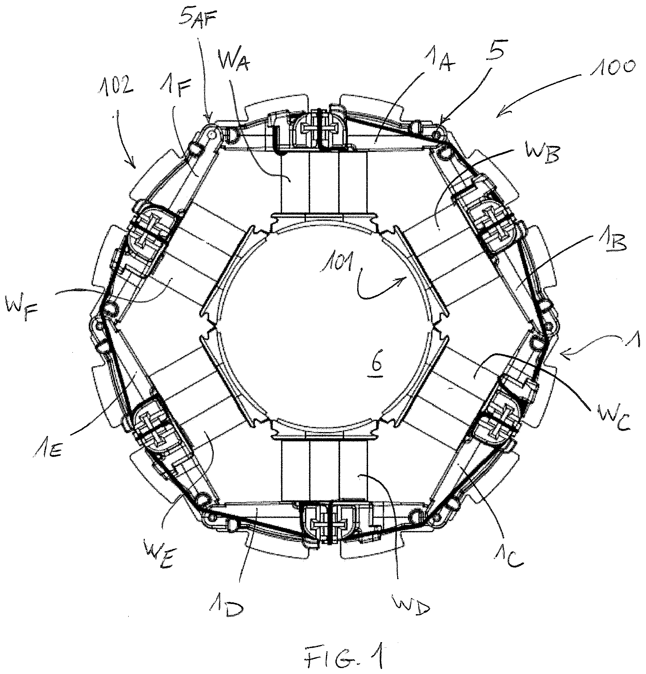

Figs. 1 to 3 disclose a stator 100 for an inrunner brushless motor. The stator 100 comprises basically a stator core 1 including a plurality of stator core segments 1_{A} to 1_{F} (hereinafter segments) and coils W_{A} to W_{F} of a conductive wire, for example copper wire.

Fig. 1 illustrates the stator in the operational closed-ring configuration. A rotor is received in the space 6 surrounded by the coils (Fig. 1). The stator (or stator core) has an inner side 101 facing the rotor and related center of rotation, and an opposite outer side 102.

Adjacent segments are connected by hinges 5. At least one hinge 5 is openable (separable) allowing separation of at least a pair of segments and, therefore, opening of the stator ring. For example, at least a separable hinge 5_{AF} is provided between the segments 1_{A} and 1_{F}. A separable hinge includes for example hinge members which can be manually engaged or disengaged.

In a preferred embodiment all hinges 5 are separable and therefore each segment 1_{A} - 1_{F} of the stator core (when not wired, i.e. without coils) can be individually hinged to, or separated from, the other segments. Consequently, the stator core is openable at each hinge 5. After winding, the stator is generally openable only at one hinge due to the presence of the bridge wires, for example at hinge 5_{AF}.

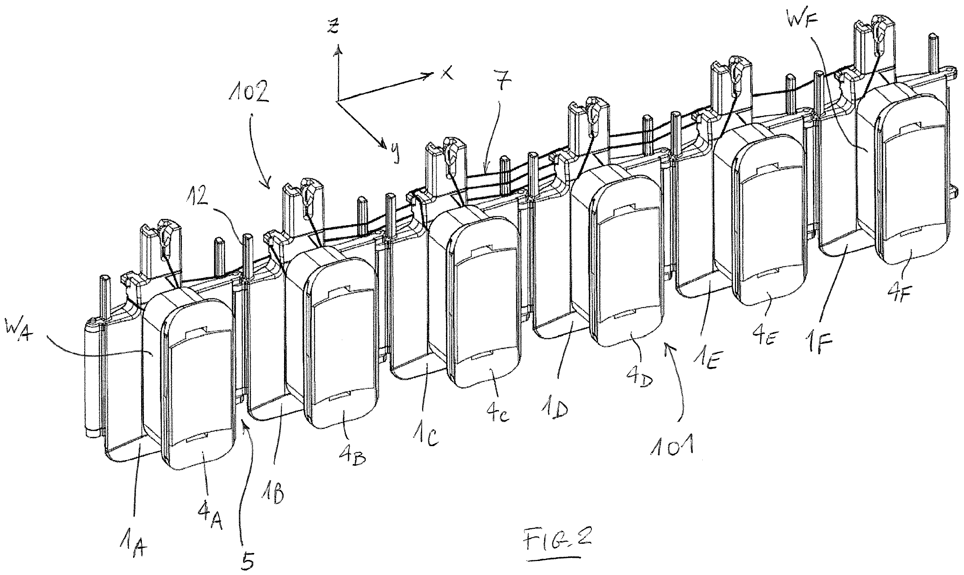

Upon aperture of the ring, by disconnecting e.g. the separable hinge 5_{AF}, the segments can be put in a flat planar configuration as in Figs. 2-3, wherein the segments are aligned side by side in a straight row. This flat configuration facilitates the process of winding the coils providing a much easier access to the coil supports 4_{A} to 4_{F}.

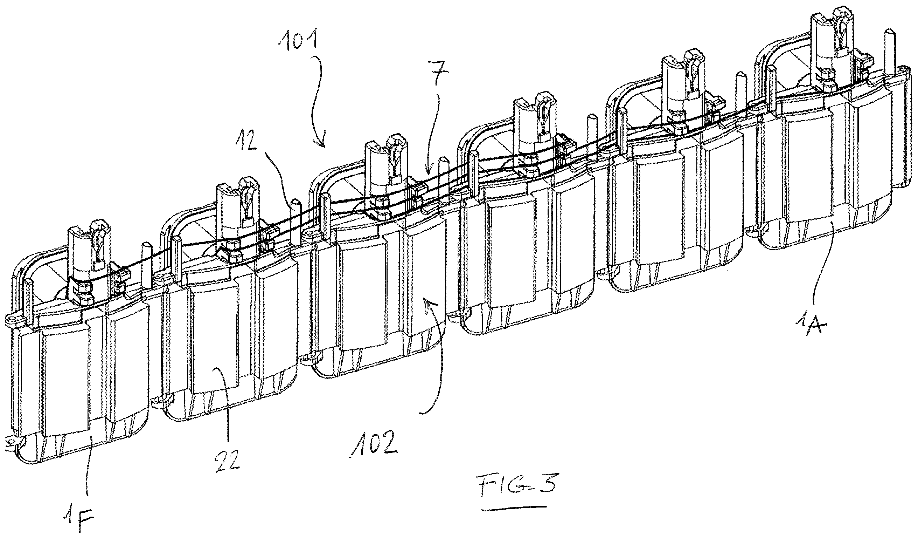

The inner side 101 and outer side 102 are also indicated in Fig. 2 and Fig. 3. It can be noted the coil supports 4_{A} to 4_{F} project towards the inner side 101.

The stator 100 further includes an internal wiring 7 which includes, for example, one or more bridge wires to connect coils of different segments, e.g. coils which belong to the same electrical phase.

For example, in a three phase stator each phase has its own pair of coils wherein a first phase includes coils W_{A} and W_{D} wound around segments 1_{A} and 1_{D}, a second phase includes coils W_{B} and W_{E}, a third phase includes coils W_{C} and W_{F}. The wiring 7 includes bridge wires to connect the two coil portions of each phase and provides external connection, e.g. six connection wires (two wires per phase) for the above mentioned three-phase stator. A phase may include more than two coils in some embodiments.

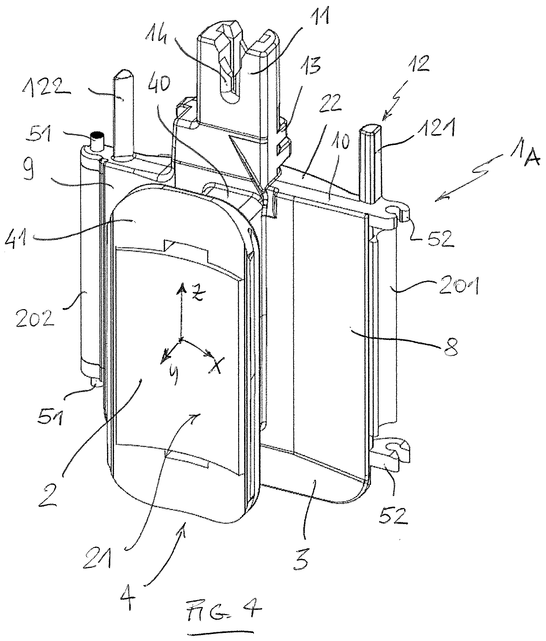

The structure of each segment is better illustrated by Fig. 4 with reference to the segment 1_{A}, the other segments being identical. When appropriate for disambiguation, features of a segment are accompanied by a subscript letter to denote the specific segment.

It can be expedient to describe the stator core and segments with reference to axes ***x, y*** and ***z*** as shown in Fig. 2 and Fig. 4 where: ***x*** denotes a longitudinal direction; ***y*** denotes a radial direction (to/away from center); ***z*** denotes an axial direction and is the parallel to the intended axis of rotation of the brushless motor (i.e. of a rotor coupled to the stator).

The segment 1_{A} includes a ferromagnetic core 2 and an insulation body 3 around the core 2. The core 2 is at least partially encapsulated in the body 3.

The core 2 is made of a suitable magnetic metal, for example iron. Preferably the core 2 is made of several thin laminates. The insulation body 3 is made preferably of a plastic material.

The insulation body 3, in some embodiments, can be molded over the ferromagnetic core 2 (overmolding process).

The ferromagnetic core 2 is partially encapsulated by the insulation body 3. A front surface 21 and rear parts 22 (see also Fig. 3) of the core 2 remain exposed.

The segment 1_{A} has a coil support 4 suitable for supporting the coil W_{A}. The coil support 4 has a root portion 40, preferably of a rectangular or substantially rectangular section, and a front flange 41. The conductive wire is wound around the root portion 40 from the base of the root portion 40 to the front flange 41.

In addition to the support 4, the insulation body 3 essentially comprises a left wing 8 and a right wing 9 extending from respective sides of the winding support 4; an upper edge 10 behind the winding support 4 (according to the radial direction ***y***), a head part 11 above the winding support 4 (according to ***z***).

The insulation body 3 includes, in addition to said winding support 4, wire guide members for the wiring 7. Said wire guide members include, in the shown embodiment, side pins 12 and rear spacers 13.

The side pins 12 are formed on the upper edge 10 and on both sides of the head part 11. The rear spacers 13 are formed on the rear of the head part 11, opposite to the support 4. The head 11 has also a notch 14 for fixation of an input or output wire (connection wire).

In a preferred embodiment the pins 12 extend in the axial direction ***z*** and have a cylindrical shape or a substantially cylindrical shape.

The side pins 12 preferably include a left pin 121 and a right pin 122. Therefore each segment has a pair of such pins, for example the pins of the segment 1_{A} are denoted with 121_{A} and 122_{A}.

In the shown embodiment, the left pin 121 is projecting from the left wing 8 and the right pin 122 is projecting from the right wing 9. The pins 121, 122 are close to the hinge 5, to provide a guide for the wiring 7 at the transition point between adjacent segments.

It can be seen that, in the vicinity of each hinge 5, the wiring 7 encounters a pair of guide pins including the left guide pin of one segment and the right guide pin of another segment.

Fig. 4 also illustrates that the core 2 has a left edge 201 of a concave shape and a right edge 202 of a convex shape, so that the core edges matches with the core edges of adjacent segments at the hinge connections. Particularly, a convex edge of the iron core of one segment is received into and can rotate within the concave edge of the iron core of an adjacent segment, once the segments are connected to each other.

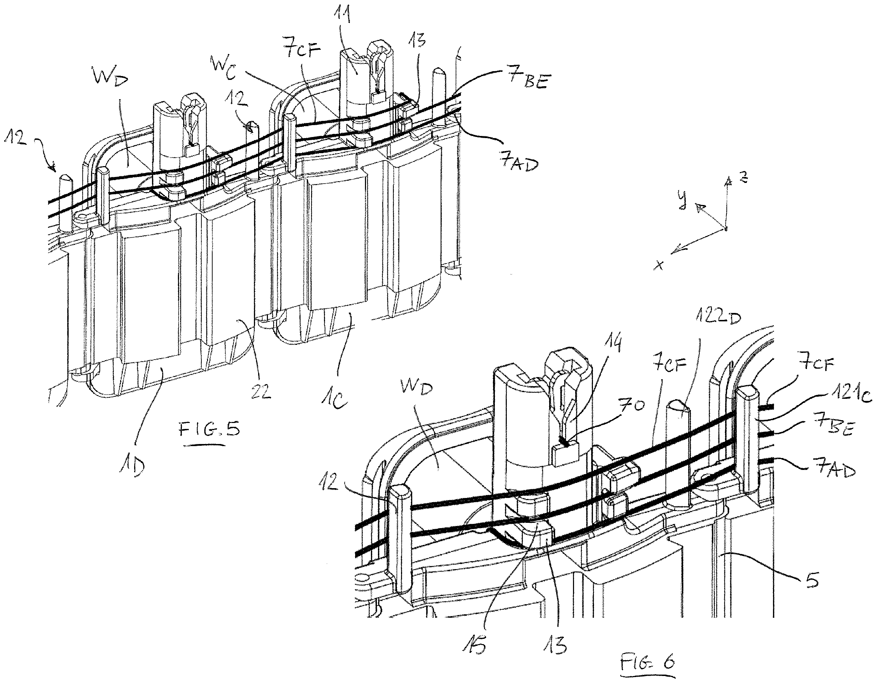

Figs. 5 and 6 illustrate the function of the pins 12 and wire spacers 13. The wiring 7 include for example wires 7_{AD}, 7_{BE} and 7_{CF}, which connect the coils W_{A} and W_{D}, W_{B} and W_{E}, W_{C} and W_{F} respectively.

It can be appreciated that the wires 7_{AD}, 7_{BE}, 7_{DF} are held in position by the wire spacers 13 or by recesses 15 formed between them. The wires are firmly held in position and kept spaced apart. As illustrated in Fig. 5 and Fig. 6, the wires run substantially parallel and distanced, that is at different heights (levels) above the coils according to the axial direction ***z.***

Fig. 6 also illustrates a connection 70 of the segment 1_{D} which, in this case, is the same wire 7_{AD} which emerges from the coil W_{D}. Another connection is made on the segment 1_{A} and the two connections form the connection of one phase (e.g. phase *u, v* or *w* according to common designation), which is wound around the segments 1_{A} and 1_{D}.

The pins 12 are arranged to guide the path of the wiring 7 between adjacent segments. At the interface between adjacent segments (i.e. in the vicinity of the hinge 5) the wires encounter a first pin which is a pin of one segment (e.g. left pin) and a second pin which is a pin of the other segment (e.g. right pin) and the wires pass alternately in front of the first pin and behind the second pin, or vice-versa. This results in a convex path towards the inner side of the stator, instead of a straight path.

For example, Fig. 6 illustrates that the wires 7_{AD}, 7_{BE}, 7_{DF} in the proximity of the hinge 5 between the segments 1_{C} and the segment 1_{D}, pass ahead the left pin 121c and behind the right pin 122_{D}.

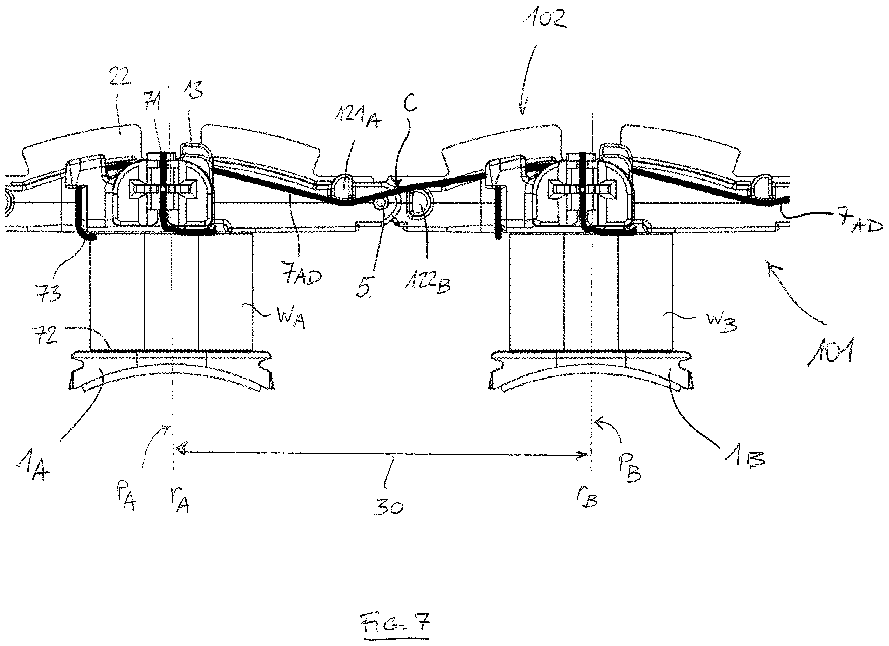

The function of the pins 12 is further illustrated with the help of Fig. 7. Two adjacent segments, such as segments 1_{A} and 1_{B}, in a flat planar configuration as in Fig. 1, are separated by a chord 30, which is the distance between the radial axes, such as the axes *r_{A}*, *r_{B}* in this example. Accordingly a wire stretched between the segments 1_{A} and 1_{B}, in absence of a guide means, would have the same or substantially the same length as said chord 30.

The bridge wire 7_{AD} however passes behind the segments, being retained by the spacers 13, and around the pins 121_{A} and 122_{B}, thus running a length between the two adjacent segments 1_{A}, 1_{B} greater than said pitch 30. This increased length is due to the convex path imposed by the passage around the pins 121_{A} and 122_{B}.

The reference length of the wire 7_{AD} can be taken, for example, between a first vertical plane P_{A} containing the axis *r_{A}* and a second vertical plane P_{B} containing the axis *r_{B}.* The term vertical plane denotes a plane parallel to the axis ***z,*** i.e. a plane perpendicular to the drawing plane of Fig. 7.

As a result of passing ahead of pin 121_{A} and then behind the pin 122_{B}, the bridge wire 7_{AD} follows a wave path or a sinusoidal path. The same applies mutatis mutandis to other wires 7_{BE}, 7_{DF}.

The convex path of the bridge wire 7_{AD} is also the result of the spacers 13 being behind the guide pins 121_{A} and 122_{B}, according to the radial direction ***y*.** The guide pins are ahead of the spacers 13, towards the inner side 101 and therefore closer to the center of rotation.

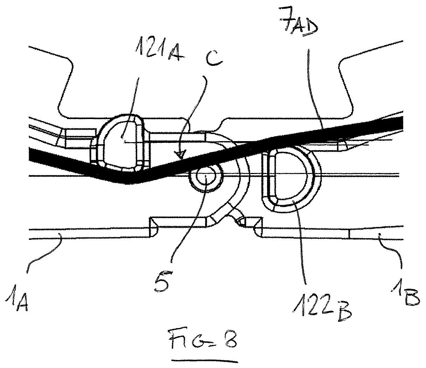

The convexity of the wire is evidenced by the reference C in Figs. 7 and 8.

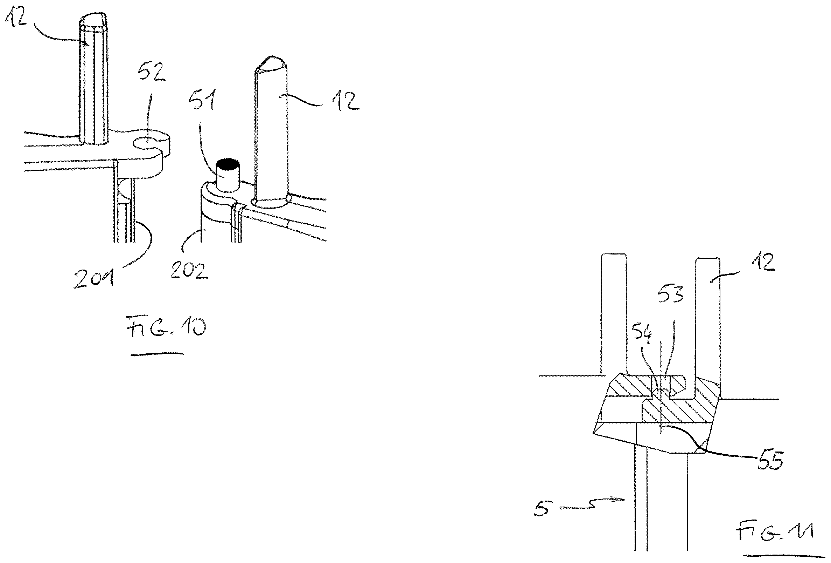

The guide pins are close to the hinge 5. The distance between the central axis of each guide pin and the axis of the hinge 5 is preferably not greater than 15% of the overall width of a segment according to the direction ***y*.** The axis of a hinge 5 is the axis of rotation of the hinge and is shown as 55 in Fig. 11.

The guide pins 12 have preferably one or more rounded edges or rounded lateral surfaces for contact with the bridge wire, for example rounded surface 32 of Fig. 10.

Fig. 7 also illustrate the wire 71 entering the stator segments 1_{A} via the notch of the head 11 and forming loops 72 of the coil W_{A}. The loops 72 collectively form the coil W_{A}; only one loop 72 is shown in the figure for illustration purpose. Then the wire emerges as wire 73 from the coil W_{A} and passes behind the segment 1_{A} and around the rear spacers 13. From here, the wire goes to the segment 1_{D} as bridge wire 7_{AD} above described. The wiring of the other segments is similar. When the bridge wire 7_{AD} reaches the segment 1_{D}, it forms the coil W_{D}. The coils W_{A} and W_{D} form, in this example, one phase of the winding.

It can be appreciated that the coils W_{A} and W_{D} are formed by the same uninterrupted wire and can be formed without any cut. The uninterrupted wire starts at a first connection at segment 1_{A} and ends at a second connection at segment 1_{D}. Said two connections are the electrical connection of the related phase of the winding. A connection 70 is visible in Fig. 6.

Preferably the pins 12 are not aligned (misaligned) according to the longitudinal axis y. Fig. 8 shows, for example, that the left pin 121 is behind the right pin 122 in the radial direction ***y*.** Accordingly a pair of pins 12 (e.g. pins 121, 122) in the vicinity of a hinge 5 appear staggered in the ***y*** direction.

A process for making a stator is now described.

The process may comprise the making of a plurality of coils by winding a conductive wire around the winding supports of the stator core 1. According to an embodiment of the invention, said process includes also the making of the wiring 7.

The process includes laying down wires 7_{AD}, 7_{BE} and 7_{CF}, each of said wires connecting a first coil made on a first support, e.g. support 1_{A}, 1_{B} or 1c of the stator core 1 and a second coil made on a second support of the stator core 1, e.g. support 1_{D}, 1_{E} or 1_{F} respectively. Said wires are passed around pins 12 of the segments, e.g. as illustrated in Fig. 7, so that the length of the wire between two adjacent segments is greater than the chord 30 as above explained.

The wire may be delivered by either a needle system or a flyer system.

The process may include the following steps. A first step is positioning a wire feeding device (e.g. needle or flyer) in a first start position facing a first support of the stator core 1, for example the support 4_{A} of the segment 1_{A}. The start position is a position suitable to start winding the wire around the support 4_{A} of the segment 1_{A}.

A second step is making a first coil W_{A} around said first support 4_{A} by moving at least one of the feeding device and the support relative to the other. For example a flyer rotates around the support 4_{A}.

A third step, which is is performed after completion of said first coil, is moving the feeding device to a second start position facing a second support of the stator core, for example the support 4_{D} of the segment 1_{D}.

A fourth step is making a second coil W_{D} around said second support 4_{D} by moving at least one of the feeding device and the support relative to the other,

The third step includes laying the bridge wire 7_{AD} on the back of the stator core, and passing the wire around the pins 12 as previously described. Doing so, the wire feeder passes between two pins of a pair, e.g. between the pins 121_{A} and 122_{B}. At each passage between two adjacent segments, namely from segment 1_{A} to segment 1_{B}, from segment 1_{B} to segment 1_{C} and from segment 1_{C} to segment 1_{D}, the bridge wire 7_{AD} follow a convex path passing around the pins 12 of the corresponding segments.

Accordingly, the wire 7_{AD} is able to follow the rotation of the segments when the stator is closed and collapses to the annular ring configuration of Fig. 1.

The first coil W_{A} and second coil W_{D}, as above described, form a phase of the winding which is made of uninterrupted wire.

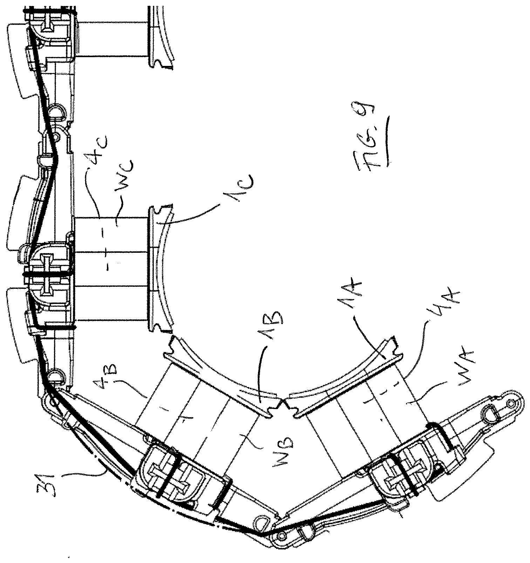

This effect is elucidated in Fig. 9, showing segments 1_{A} and 1_{B} rotated in the radial position. The bridge wire 7_{AD}, thanks to the additional length provided by the convex path around the pins 12, is able to approach an arc 31 between the two segments, which is longer than the chord 30, without being stretched.

It has to be noted that the wires 7_{AD}, 7_{BE} and 7_{CF} rest on the back side of the segments where the wire spacers 13 are provided.

Figs. 10, 11 show exemplary embodiment of a hinge 5 between two adjacent segments. The hinge 5 includes a first hinge member made on one segment and a second hinge member made on a second, adjacent segment. The first and second hinge member can engage each other rotatably to form the hinge 5.

In Fig. 10, same as Fig. 4, the hinge 5 includes a pin 51 and a seat 52; in Fig. 11 a pin 54 can be received in a hole 53. The pin 51 or pin 54 is a male hinge member received in a female hinge member represented by the seat 52 or hole 53. When engaged, the pin 51 or 54 can rotate within the seat 52 or hole 53 to provide the hinged connection between the adjacent segments.

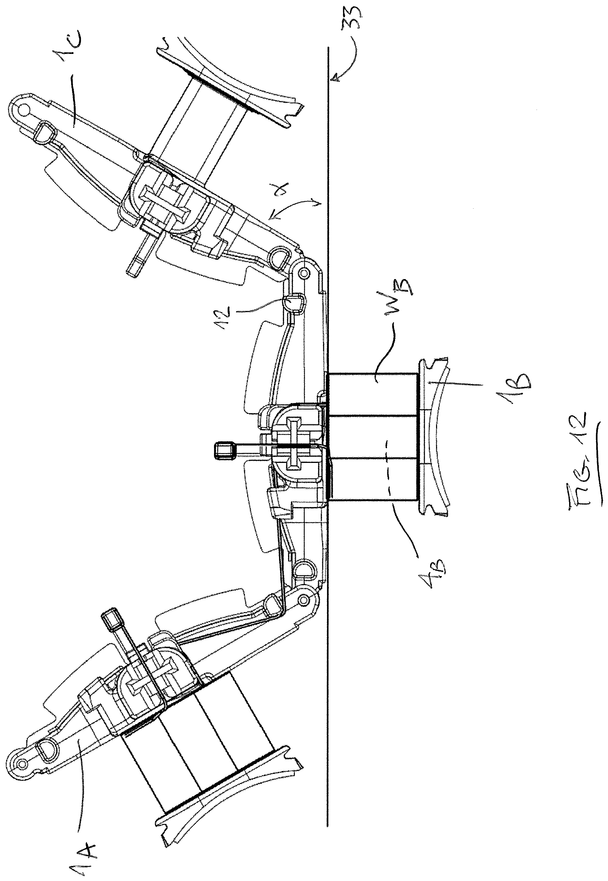

Fig. 12 illustrates an interesting embodiment wherein adjacent segments can be back-rotated around the respective hinges 5 so that no part of the adjacent segments intersects a front base plane of a segment during the winding process.

The angular position of segments can be given with an angle which is set to null when the segments are aligned as in Fig. 2; is positive when a segment rotates towards the closed ring arrangement of Fig. 1. Accordingly, in Fig. 12 the segments 1_{A}, 1_{C} adjacent to the segment 1_{B} are rotated by a negative angle α (i.e. rotated backwards).

The segments 1_{A}, 1_{C} therefore remain behind a front plane 33 of the segment 1B, and no part of the segments 1_{A}, 1_{C} intersect said plane. The space around the support 4_{B} is free and a flyer can be safely used to make the coil W_{B}.

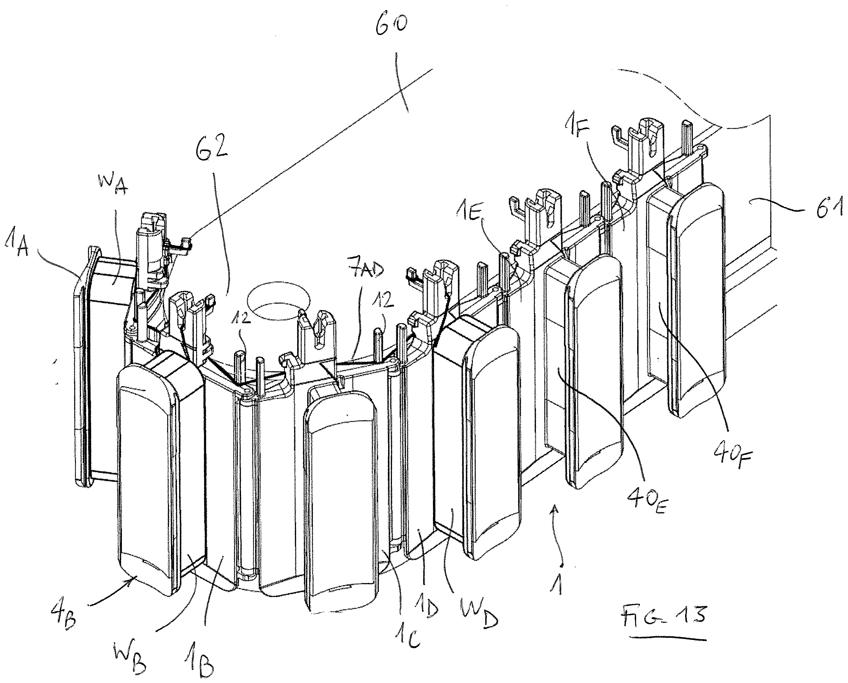

Fig. 13 illustrates an embodiment of a process for winding a wire over a stator core 1 of the invention.

The open stator core 1 is attached to a supporting arm 60, sliding on a lateral surface 61. A suitable positioning device can move the open stator core 1 along the surface 61 to position a selected segment, such as segment 1_{B}, at a front tip 62 of the arm 60.

Due to a front curvature of the arm 60, when the segment 1_{B} is at the front tip 62 the adjacent segments 1_{A} and 1_{C} are backward rotated in a manner similar to in Fig. 12, leaving a free space around the support 4_{B} of the segment 1_{B}. In this position, the wire can be safely wound on the support 4_{B} without interfering with other segments, to form the coil W_{B}. A flyer wire feeder can also be used.

Fig. 13 illustrates an intermediate step wherein the coils W_{A} and W_{D} of a first phase are already formed and a wire 7_{AD} is in place, passing around the pins 12 of the segments 1_{A} to 1_{D}. Fig. 13 refers in particular to the making of the first coil of the second phase, namely the coil W_{B}. After the completion of the coil W_{B}, the segment 1_{E} is moved in the front position, at the front tip 62, the bridge wire 7_{BD} is put in place and then the coil W_{B} is created.

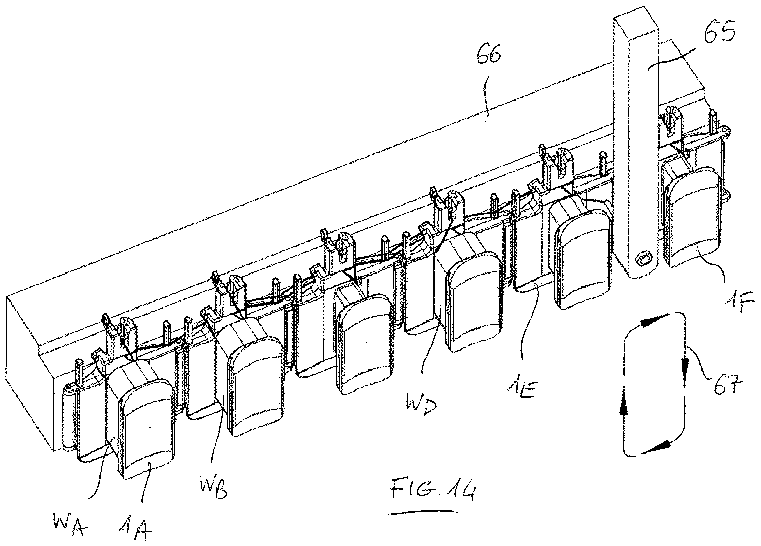

Fig. 14 illustrates an example of winding with a needle feeder 65. The open stator core 1 is placed on a support 66. Fig. 14 illustrates a step of making the coil W_{E} around the segment 1_{E}, after completion of the coil W_{B}. The line 67 illustrates the path of wire deposition followed by the needle feeder 65.

## Claims

1. A stator core (1) for making the stator of an inrunner brushless motor, the stator core (1) comprising a plurality of stator core segments (1_{A}-1_{F}) which can be arranged to form a stator core ring, wherein:
- each stator core segment includes a ferromagnetic core (2) and an insulation body (3), and includes a coil support;
- adjacent core segments are hinged to each other and at least a first segment (1_{A}) and a second segment (1_{F}) are connected to each other by a separable hinge (5_{AF}) allowing said first segment and second segment to be connected to or disconnected from one another, so that the stator core ring is openable;
- the stator core has an inner side (101) and an outer side (102);
- **characterized in that** the insulation body (3) of each segment includes at least one wire guide member (12) which is positioned in such a way that, when the stator core ring is open, a bridge wire (7_{AD}) of a winding made on the stator core can be passed around said at least one guide member in such a way that said internal wire, in the space between two adjacent segments, follows a path with a convexity towards the inner side (101).

2. A stator core according to claim 1, wherein said at least one guide member (12) of each segment includes a guide member close to a hinge (5) connecting the segment with an adjacent segment.

3. A stator core according to claim 1 or 2, wherein said at least one guide member (12) includes at least one pin (121, 122), preferably of a cylindrical or substantially cylindrical shape.

4. A stator core according to claim 3, wherein the at least one pin (121, 122) extends upwards from an upper edge (10) of the insulation body (3).

5. A stator core according to any of claims 1 to 4, wherein the insulation body (3) of each segment comprises a left wing (8) and a right wing (9) on the sides of the coil support (4), and said at least guide member includes a left pin (121) projecting upwards from the left wing (8) and a right pin (122) projecting upwards from the right wing (9).

6. A stator core according to any of the previous claims, wherein the length of said bridge wire (7_{AD}) between adjacent segments is greater than a pitch or chord distance (30) between the adjacent segments, said pitch or cord distance being measured when the adjacent segments are side by side in a flat configuration.

7. A stator core according to any of the previous claims wherein the segments are configured to allow a relative rotation of adjacent segments around the respective hinges (5), when the stator core ring is open, to reach a position where a front base plane (33) of a segment (1_{B}) does not intersect with any part of the one or more adjacent segments (1_{C}, 1_{A}).

8. A stator core according to any of the previous claims, wherein the hinges (5) between adjacent segments are part of the insulation bodies (3) of the segments.

9. A stator core according to claim 8, wherein said separable hinge includes a first hinge member (51) of a first segment and a second hinge member (52) of a second segment, wherein the first hinge member and the second hinge member can reversibly engage each other to form the hinge and are made on the insulation body of said first segment and second segment, respectively.

10. A stator core according to any of the previous claims, wherein all segments are connected to each other by separable hinges, so that each segment is individually separable from other segments and the stator core ring is openable between any pair of adjacent segments.

11. A stator core according to any of the previous claims, wherein the insulation body (3) of each segment includes wire spacers (13) arranged to space different bridge wires, and said wire spacers are made on the outer side of the insulation body.

12. A stator (100) for an inrunner brushless motor comprising a stator core (1) and a plurality of coils (W_{A} - W_{F}) of a conductive wire made on the stator core (1), wherein:
- the stator core (1) has a plurality of segments, wherein the segments can be arranged to form a stator ring, wherein each segment includes a ferromagnetic core (2) and an insulation body (3), and includes a coil support carrying a respective coil;
- adjacent core segments are hinged to each other and at least a first segment (1_{A}) and a second segment (1F) are connected to each other by a separable hinge (5_{AF}) so that the stator ring is openable at said separable hinge (5_{AF});
- the stator has an inner side (101) and an outer side (102);
**characterized in that:**
- the stator includes an internal wiring (7) for connection of at least two coils made on separate segments and the insulation body (3) of each segment includes at least one wire guide member (12) and at least one bridge wire (7_{AD}, 7_{BE}, 7_{CF}) of said internal wiring (7) is guided by said at least one guide member (12) to follow a path having a convexity towards the inner side (101) of the stator when the stator ring is open.

13. A stator according to claim 12, wherein said path of the bridge wire (7_{AD}), between adjacent segments, is longer than a pitch or chord distance (30) between the adjacent segments.

14. A stator according to claim 12 or 13 wherein the stator is single-phase or multi-phase and comprises a plurality of coils for the phase or each phase, and the coils of each phase are connected by an uninterrupted bridge wire.

15. A stator according to any of claims claim 12 to 14, wherein said bridge wire (7_{AD}), passing from a first segment (1_{A}) to an adjacent second segment (1_{B}), is guided by a first pin (121_{A}) which belong to the first segment and a second pin (122_{B}) which belong to the second segment.

16. A stator according to any of claims 12 to 15 wherein the hinges (5) between stator segments are made on the insulation bodies (3) of the segments.

17. A process for making a stator for an inrunner brushless motor, comprising the steps of: providing a stator core with openable-ring structure according to any of the previous claims, and making a plurality of coils by winding a conductive wire around the coil supports of the stator core, wherein the making of the coils includes:
arranging at least one bridge wire (7_{AD}) between a first coil made on a first support of the stator core and a second coil made on a second support of the stator core, said bridge wire being guided by at least one guide member (12) of at least one stator core segment, so that said bridge wire follows a path with a convexity towards the inner side (101) of the stator, when the stator ring is open.

18. A process according to claim 17, wherein the process of making the coils include:
a) positioning a wire feeding device in a first start position facing a first support of the stator core;
b) making a first coil around said first support by moving at least one of the feeding device and the support relative to the other;
c) after completion of the first coil, moving the feeding device to a second start position facing a second support of the stator core; making a second coil around said first support by moving at least one of the feeding device and the support relative to the other,
wherein: the step c) includes passing the wire around said guide members of the stator core and according to said path with a convexity towards the inner side.
